# EUROPÄISCHE PATENTSCHRIFT

(11) **EP 0 722 823 B1**
(45) Veröffentlichungstag und Bekanntmachung des Hinweises auf die Patenterteilung: **16.09.1998**
(21) Anmeldenummer: 95100689.9
(22) Anmeldetag: 19.01.1995
(51) Int. Cl.: B29C 49/46

(54) **Verfahren zur Herstellung plasmageeigneter Oberflächen thermoplastischer Kunststoffteile**
Method for producing thermoplastic objects with plasma-suitable surfaces
Procédé pour la fabrication d'objets thermoplastiques avec des surfaces adaptées pour plasma

(43) Veröffentlichungstag der Anmeldung: 24.07.1996
(73) Patentinhaber: INPRO Innovationsgesellschaft für fortgeschrittene Produktionssysteme in der Fahrzeugindustrie mbH, 10787 Berlin (DE)
(72) Erfinder: Rogos, Jürgen Dr.-Ing., 14089 Berlin (DE); Gleich, Henning, 10587 Berlin (DE); Hoyer, Olaf, 10587 Berlin (DE)
(74) Vertreter: Hoffmann, Klaus-Dieter, Dipl.-Ing.

(56) Entgegenhaltungen:
- EP-A- 0 063 378
- EP-A- 0 305 740
- DE-A- 3 434 317
- DE-A- 3 435 992
- GB-A- 1 174 985
- PATENT ABSTRACTS OF JAPAN vol. 012 no. 028 (C-471) ,27.Januar 1988 & JP-A-62 179536 (MAZDA MOTOR CORP) 6.August 1987,

## Beschreibung

Die Erfindung betrifft ein Verfahren zur Herstellung plasmageeigneter Oberflächen thermoplastischer Kunststoffteile, insbesondere plasmageeigneter Innenoberflächen von Kunststoffkraftstoffbehältern (KKB), bei welchem zunächst vorzugsweise ein schlauchförmiger Vorförmling gebildet und innerhalb einer Blasform aufgeweitet wird, wenigstens Teilbereiche mit wenigstens einem Medium behandelt werden, welches Bestandteil eines Gasgemisches sein kann, und mit dem der die behandelten Bereiche der Hohlkörperwandung bildende Kunststoff reagiert, um die physikalischen und/oder chemischen Eigenschaften der behandelten Bereiche zu verändern, und bei dem anschließend die Kunststoffmasse abgekühlt wird.

Bei herkömmlichen Verfahren dieser Art (z.B. DE 42 03 705 A1), bei denen der schlauchförmige Vorförmling aus Polyethylen gebildet wird, erfolgt die Aufweitung des Vorförmlings in der Blasform durch Einblasen von Stickstoff, zumal Stickstoff für die anschließende Fluorierung erforderlich ist. Während der Abkühlung im Blasformwerkzeug wird die Hohlkörperwandung mit einem Stickstoff-/Fluorgemisch beaufschlagt. Das Werkzeug wird anschließend geöffnet und das Bauteil entnommen.

Mittels des Blasformprozesses hergestellte Grundkörper für Kunststoffkraftstoffbehälter besitzen eine undefinierte und unebene Innenoberfläche mit starken, hügelartigen Erhebungen. Es kann davon ausgegangen werden, daß sich in den Lunkern oder Einschlüssen, bevorzugt in diesen Erhebungen, Gasreste aus dem Überdruckprozeß ansammeln.

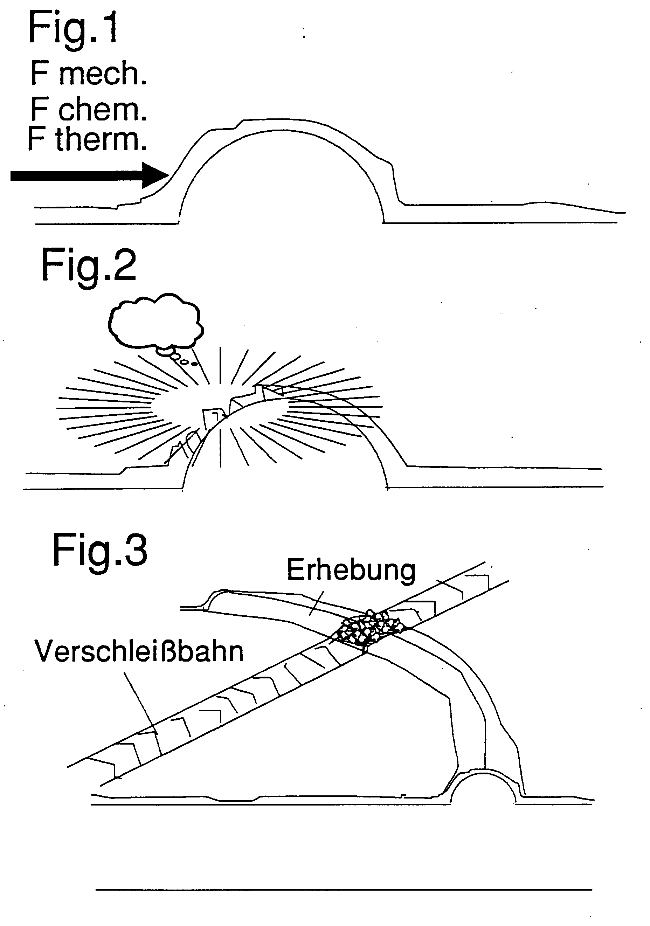

Diese Gasreste werden während der Beschichtung zwar versiegelt, können jedoch später unter Energiezufuhr ausgasen, wie in den Fig. 1 und 2 der Zeichnung schematisch dargestellt ist, wobei die Fig. 1 eine unebene Erhebung einer Innenoberfläche, auf die mechanische, chemische und/oder thermische Kräfte F_{mech} bzw. F_{chem} bzw. Fₜₕₑᵣₘ einwirken, und F₂ den Entgasungsvorgang aus dem entsprechenden Einschluß gemäß Fig. 1 unter Energiezufuhr schematisch verdeutlichen.

Es sind Bestrebungen im Gange, den Blasformprozeß zu beschleunigen, indem die Prozeßzeit mittels gezielter Temperaturführung (flüssiger Stickstoff, Kryofluorierung) verringert wird, wobei, wie auch bei allen anderen die Abkühlzeit der Kunststoffmasse extrem verkürzenden Methoden, die Entstehung von Unebenheiten (Fig. 1) während der turbulenten Strömung verursacht wird. Die Ursache hierfür kann darin gesehen werden, daß materialabhängig, die zuerst erkaltete, sehr dünne Haut auf der wärmeren Matrixmasse noch verschoben werden kann. Fig. 3 der Zeichnung verdeutlicht schematisch diesen Effekt, wobei ersichtlich ist, daß längs einer Verschleißbahn Verwerfungen in der Haut der Erhebung auftreten.

Das Aufrollen oder Schieben von Verwerfungen kann mittels geeigneter Verfahrensparameter bei der Formgebung verändert werden. Im übrigen ist diese Verfahrensführung, die sicherlich in Anlehnung an die Parameter während der Fluorierung erfolgt, für die zu plasmapolymerisierenden KKB ungeeignet. Gründe hierfür sind der exotherme Prozeß, der wegen der Gefahr des Verzugs und der Materialschädigung unterdrückt werden muß, sowie die beschränkte Realisierbarkeit von prozeßzeitreduzierenden Schritten aufgrund des toxisch resistenten und abgeschlossenen Gassystems. Somit kann mit geeigneter Verfahrensführung die Zykluszeit gegenüber dem Inline-Blasformen verringert werden. Da die KKB wegen der besseren Temperaturführung des Prozesses mit Stickstoff und nur sehr geringem Sauerstoffanteil geblasen werden, kann angenommen werden, daß sich bevorzugt der Stickstoff fehlstellenfördernd auswirkt. Die Fehlstellen auf der unbehandelten Innenoberfläche, die sich als statistisch verteilte und länglich strukturierte Erhebung darstellen, können als potentielle Sollbruchstellen für die nachträglich mittels Plasmapolymerisation aufgebrachte Barriereschicht fungieren, insbesondere wenn die Oberfläche mechanisch, thermisch oder chemisch beansprucht wird. Diese Schichtalterung wird verstärkt durch kombinierte Schädigungsmechanismen, die sich nach der Plasmabeschichtung während der Gebrauchsphase und während der Tests bei der Konditionierung (Innendruck, Quellung) sowie dem Schüttelversuch durch die partielle sehr starke Beanspruchung auswirken. Die Barrierewirkung der Sperrschicht nimmt dann rapide ab.

Ziel der Erfindung ist es daher, für eine Reduktion bzw. vollständige Behebung der aufgezeigten Probleme zu sorgen.

Der Erfindung liegt somit die Aufgabe zugrunde, ein Verfahren der eingangs erwähnten Art zur Verfügung zu stellen, mit dem an der Oberfläche thermoplastische Kunststoffteile, insbesondere an der Innenoberfläche von Kunststoffkraftstoffbehältern (KKB) potentielle Fehlstellen vermieden werden können, die sich z.B. in Form gasgefüllter Erhebungen für die im Anschluß an die Formgebung aufgebrachte Barriereschicht als Sollbruchstellen auswirken können.

Diese Aufgabe wird erfindungsgemäß dadurch gelöst, daß zum Blasformen Polyethylentypen mit verhältnismäßig breitem Verarbeitungsfenster und ein Gasgemisch, das die Polyethylenoberfläche schon beim Blasformen anoxidiert und gleichzeitig eine höhere Wärmeleitfähigkeit als Stickstoff besitzt, als Prozeßgas eingesetzt werden, und daß undefinierte und unebene Oberflächenanteile der Haut durch anschließendes Plasmaätzen im Sauerstoff- oder Wasserstoff/Argon-Plasma abgetragen werden.

Vorteilhafte Weiterbildungen des erfindungsgemäßen Verfahrens ergeben sich aus den Patentansprüchen 2 bis 6.

Das erfindungsgemäße Verfahren vermeidet die Bildung potentieller Fehlstellen in Form gasgefüllter Erhebungen an der KKB-Innenoberfläche, so daß die Gefahr der Bildung von Sollbruchstellen für die im Anschluß an die Formgebung aufgebrachte Barriereschicht insofern beseitigt ist.

Weiterhin sorgt das erfindungsgemäße Verfahren dafür, daß die jungfräuliche Innenoberfläche des KKB's mit einer Plasmaschicht gleichmäßiger Dicke belegt wird, weil Erhebungen der Innenoberfläche vermieden oder reduziert werden. Durch die mit dem erfindungsgemäßen Verfahren erreichte Reduzierung oder Vermeidung vor allem der sehr großen Erhebungen wird eine vollständige Beschichtung des Substrats erreicht, das anderenfalls teilweise an den Spitzen "nackt" vorliegt. Eine nachträgliche Glättung der Oberfläche oder Herstellung einer glatten Oberfläche würde auch eine dünnere Schicht ohne Eigenschaftsreduktion ermöglichen, und damit auch die Beschichtungszeit verkürzen. Mit Hilfe der Erfindung läßt sich die Schichtstabilität, -haftung und -beständigkeit erhöhen. Werden die KKB zusätzlich mit Luft oder Kohlendioxid geblasen, kann der erhöhte Sauerstoffanteil in der Schicht z.B. für die Oberflächenplasmaaktivierung genutzt werden.

Bei der Durchführung des erfindungsgemäßen Verfahrens wird zunächst ein schlauchförmiger Vorförmling aus Polyethylen mit einem verhältnismäßig breiten Verarbeitungsfenster gebildet, damit die Hohlkörperinnenoberfläche möglichst glatt wird. Die Aufweitung des Vorförmlings in der Blasform erfolgt dann durch Einblasen von z.B. CO₂, das die PE-Oberfläche anoxidiert und eine möglichst höhere Wärmeleitfähigkeit als Stickstoff besitzt. Darauf erfolgt dann die Abkühlung des Bauteils im Werkzeug. Das Werkzeug wird dann geöffnet und das Bauteil wird entnommen. Anschließend wird das Bauteil in einen Plasmareaktor gebracht, und die Innenoberfläche wird im Sauerstoff oder Wasserstoff-/Argon-Plasma geätzt. Hierdurch werden die Unebenheiten an der Oberfläche abgetragen, und es wird eine verhältnismäßig glatte und homogene Oberfläche erreicht, die für die anschließende Plasmapolymerisation ausgezeichnet geeignet ist. Anschließend wird das Bauteil im gleichen Plasmareaktor plasmapolymerisiert, d.h. die Barriereschicht wird auf die Oberfläche aufgebracht.

## Patentansprüche

1. Verfahren zur Herstellung plasmageeigneter Oberflächen thermoplastischer Kunststoffteile, insbesondere plasmageeigneter Innenoberflächen von Kunststoffkraftstoffbehältern, bei welchem zunächst ein vorzugsweise schlauchförmiger Vorförmling gebildet und innerhalb einer Blasform aufgeweitet wird, wenigstens Teilbereiche mit wenigstens einem Medium behandelt werden, welches Bestandteil eines Gasgemisches sein kann, und mit dem der die behandelten Bereiche der Hohlkörperwandung bildende Kunststoff reagiert, um die physikalischen und/oder chemischen Eigenschaften der behandelten Bereiche zu verändern, und bei dem anschließend die Kunststoffmasse abgekühlt wird, dadurch gekennzeichnet, daß zum Blasformen Polyethylentypen mit verhältnismäßig breitem Verarbeitungsfenster und ein Gasgemisch, das die Polyethylenoberfläche schon beim Blasformen anoxidiert und gleichzeitig eine höhere Wärmeleitfähigkeit als Stickstoff besitzt, als Prozeßgas eingesetzt werden, und daß undefinierte und unebene Oberflächenanteile der Haut durch anschließendes Plasmaätzen im Sauerstoff- oder Wasser-/Argon-Plasma abgetragen werden.

2. Verfahren nach Anspruch 1, dadurch gekennzeichnet, daß zum Erzeugen einer möglichst glatten Innenoberfläche des Kunststoffkraftstoffbehälters als Polyethylentyp eine PE-HD-Masse wie Hostalen® eingesetzt und die Prozeßparameter zur Optimierung des Blasformens ohne Rücksicht auf eine nachfolgende Fluorierung abgestimmt werden.

3. Verfahren nach Anspruch 1 und 2, dadurch gekennzeichnet, daß beim Blasformen als Prozeßgas CO₂ aus einem anderen Prozeßschritt eingesetzt wird, das bereits teilweise bei der Formgebung den für das anschließende Plasmaätzen der Oberfläche positiv wirkenden Sauerstoff in die Oberfläche einbaut.

4. Verfahren nach Anspruch 1 und 2, dadurch gekennzeichnet, daß beim Blasformen als Prozeßgas Sauerstoff (O₂) eingesetzt wird, der die Oberfläche bereits bei der Formgebung teilweise anoxidiert und dabei den für das anschließende Plasmaätzen positiv wirkenden Sauerstoff in die Oberfläche einbaut.

5. Verfahren nach Anspruch 1 bis 4, dadurch gekennzeichnet, daß das Plasmaätzen mittels Sauerstoff unter hohen Abtragungsraten und gleichzeitiger Aktivierung der Oberfläche erfolgt, wobei die Haftfähigkeit der anschließend ebenfalls im Plasma aufzubringenden Barriereschicht erhöht wird.

6. Verfahren nach Anspruch 1 bis 5, dadurch gekennzeichnet, daß das Plasmaätzen mittels eines Wasserstoff/Argon-Gemisches unter hohem Ionenbeschuß der Oberfläche zu deren Glättung erfolgt, wobei die Oberfläche gleichzeitig zur Erhöhung des Haftvermögens der anschließend ebenfalls im Plasma aufzubringenden Barriereschicht aktiviert wird.

## Claims

1. Method for producing thermoplastic objects with plasma-suitable surfaces, especially plasma-suitable interior surfaces of plastic fuel tanks, at which at first a preferably hose-shaped preform is formed and expanded in a blowing mould, at least partial areas are treated with at least one medium, which can be a constituent-part of a gas-mixture, and with which the plastic reacts which forms the treated areas of the hollow body walls in order to change the physical and/or chemical characteristics of the treated areas and at which subsequently the plastic moulding mass is cooled, characterized thereby, that for blow-moulding polyethylen types with a, relatively wide processing window and a gas mixture which anodizes the polyethylen surface already at the blow-moulding and which has at the same time a higher caloric conductibility than nitrogen, is used as process gas und that undefinable and uneven surface-parts of the skin are removed by subsequent plasma-etching in the oxygen or water/argon plasma.

2. Method in accordance with claim 1, characterized thereby, that for the production of an interior surface - which is as smooth as possible - of the plastic fuel tank a PE-HP-mass such as 〈Hostalen®〉 is used as the polyethylen type and that the process parameters for the optimization of the blow-moulding are adjusted without regard to a subsequent fluorination.

3. Method in accordance with claims 1 and 2, characterized thereby, that at the blow-moulding CO₂ from another process-phase is used as process gas, which already at the shaping partly builds into the surface the oxygen which has positive effects on the subsequent plasma-etching of the surface.

4. Method in accordance with claims 1 and 2, characterized thereby, that at the blow-moulding oxygen (O₂) is used as process gas which already at the shaping partly anodizes the surface and thereby builds into the surface the oxygen which has positive effects on the subsequent plasma-etching of the surface.

5. Method in accordance with claims 1 and 4, characterized thereby, that the plasma-etching by means of oxygen takes place under high removal rates and with a simultaneous activation of the surface, whereby the adhesiveness of the barrier-layer which subsequently also has to be deposited in the plasma is increased.

6. Method in accordance with claims 1 and 5, characterized thereby, that the plasma-etching by means of a hydrogen / argon-mixture takes place under high ion bombardment of the surface to smooth it, whereby the surface is activated at the same time for the increase of the adhesiveness of the barrier-layer also to be deposited subsequently in the plasma.

## Revendications

1. Procédé pour la fabrication de surfaces adeptées pour plasma d'objets thermoplastiques, tout particulièrement de sufaces intérieures adaptées pour plasma de réservoirs plastiques à carburant dans lequel une préforme de préférence tubulaire est formée d'abord et élargie dans une moule de soufflage, dans lequel au moins des secteurs parties sont traités avec au moins un milieu pouvant être un élément d'un mélange gazeux et avec lequel réagit le plastique formant les secteurs traités de la paroi du corps creux, afin de modifier les qualités physiques et/ou chimiques des secteurs traités et dans lequel la masse plastique est ensuite refrodie, caractérisé par le fait que pour le moulage par soufflage sont utilisés comme gaz de processus des types de polyéthylène avec fenêtre de traitement relativement large et un mélange gazeux anodisant la surface en polyéthylène déjà lors du moulage par soufflage et possédant en même temps une conductibilité thermique plus élevée que l'azote et que des parties de surface non définies et non planes de pa paroi peuvent être amincies par attaque à plasma dans un plasma d'oxygène ou d'eau-/argon.

2. Procédé suivant revendication 1, caractérisé par le fait que pour la fabrication d'une surface intérieure aussi lisse que possible du réservoir plastique à carburant est utilisé comme type de polyéthylène une masse PE-HP telle que 〈Hostalen®〉 et que les paramètres de processus pour l'optimisation du moulage par soufflage sont adaptés sans tenir compte d'une fluorisation ultérieure.

3. Procédé suivant revendications 1 et 2, caractérisé par le fait que lors du moulage par soufflage du CO₂ d'une autre phase de processus est utilisé comme gaz de processus incorporant lors du moulage déjà partiellement dans la surface l'oxygène ayant un effet positif pour la suivante attaque à plasma de la surface.

4. Procédé suivant revendications 1 et 2, caractérisé par le fait que lors du moulage par soufflage il est utilisé de l'oxygène (O₂) comme gaz de processus anodisant déjà partiellement la surface lors du moulage et incorporant à cette occasion dans la surface l'oxygène ayant un effet positif pour la suivante attaque à plasma.

5. Procédé suivant revendications 1 et 4, caractérisé par le fait que l'attaque à plasma moyennant de l'oxygène est realisée avec des taux d'usinage élevés et l'activation simultanée de la surface tout en augmentant l'adhérence de la couche barrière à appliquer ensuite ègalement en plasma.

6. Procédé suivant revendications 1 et 5, caractérisé par le fait que l'attaque à plasma moyennant un mélange hydrogène/argon est réalisée sous un bombardement ionique élevé de la surface en vue de son lissage, la surface étant simultanément activée en vue de l'augmentation de l'adhérence de la couche barrière à appliquer ensuite également en plasma.
